# EUROPÄISCHE PATENTSCHRIFT

(11) **EP 3 048 034 B1**
(45) Veröffentlichungstag und Bekanntmachung des Hinweises auf die Patenterteilung: **31.03.2021**
(21) Anmeldenummer: 16155962.0
(22) Anmeldetag: 16.02.2016
(51) Int. Cl.: B62J 15/02

(54) **RADSCHÜTZER FÜR EIN FAHRRAD MIT EINFEDERNDER VORDERRADGABEL**
WHEEL PROTECTOR FOR A BICYCLE WITH RETRACTING FRONT FORK
PROTEGE-ROUES POUR UN VELO COMPRENANT UNE FOURCHE DE ROUE AVANT MONTEE SUR RESSORT

(30) Priorität: 22.01.2015 DE 102015100941; 08.04.2015 DE 102015105327
(43) Veröffentlichungstag der Anmeldung: 27.07.2016
(73) Patentinhaber: SKS metaplast Scheffer-Klute GmbH, 59846 Sundern (DE)
(72) Erfinder: KORDES, Sven, 59846 Sundern (DE)
(74) Vertreter: Basfeld, Rainer

(56) Entgegenhaltungen:
- EP-A2- 1 201 533
- DE-U1- 8 534 180
- GB-A- 2 493 978
- US-A1- 2010 164 195

## Beschreibung

Die vorliegende Erfindung betrifft einen Radschützer für ein Fahrrad gemäß dem Oberbegriff des Anspruchs 1.

Ein Radschützer der vorgenannten Art ist aus der GB 2493978 A bekannt. Der Radschützer kann an einem Fahrrad mit einer einfedernden Vorderradgabel angebracht werden. Dazu umfasst der Radschützer Gurte, die um die Tauchrohre herumgelegt werden können, und Gurte, die um die Gabelbrücke des Fahrrads herumgelegt werden können.

Ein weiterer Radschützer für ein Fahrrad mit einfedernder Vorderradgabel ist aus der EP 1 201 533 A2 bekannt. Dieser Radschützer ist zweigeteilt, wobei jeweils eines der Teile von vorne und das andere der Teile von hinten an der Gabelbrücke des Fahrrads befestigt werden kann. Für die Befestigung an der Gabelbrücke werden Schrauben verwendet.

Ein weiterer Radschützer für ein Fahrrad mit einfedernder Vorderradgabel ist aus der EP 1 435 323 A1 bekannt. Der darin beschriebene Radschützer kann mittels einer Adaptereinrichtung an der Vorderradgabel angebracht werden. Die Adaptereinrichtung umfasst ein Spreizelement, das in die in der Regel vorhandene Bohrung der Gabelkrone einbringbar und dort klemmend festlegbar ist. Der Radschützer ist im Wesentlichen einstückig aus Kunststoff ausgebildet und weist eine langgestreckte Form mit einem stufenförmigen Versatz im Übergangsbereich von dem vorderen zu dem hinteren Teil des Radschützers auf. Dieser stufenförmige Versatz ermöglicht die Verwendung des Radschützers für eine einfedernde Vorderradgabel, weil im Bereich des stufenförmigen Versatzes ein weitgehend vertikaler Abschnitt des Radschützers bei dem Einfedern der Vorderradgabel zwischen einer Gabelbrücke und einem Gabelkopf bewegt werden kann.

Als nachteilig bei diesem Stand der Technik erweist es sich, dass in den letzten Jahren Federgabelmodelle für Fahrräder auf den Markt gekommen sind, die eine Karbonkrone ohne entsprechende Bohrung aufweisen. Damit lässt sich der aus dem Stand der Technik gemäß EP 1 435 323 A1 bekannte Radschützer bei diesen Fahrradmodellen nicht mehr anbringen.

Das der vorliegenden Erfindung zugrunde liegende Problem ist die Schaffung eines Radschützers der eingangs genannten Art, der auch bei Fahrrädern ohne Bohrung in der Gabelkrone verwendet werden kann und insbesondere trotzdem einfach handhabbar ist.

Dies wird durch einen Radschützer der eingangs genannten Art mit den kennzeichnenden Merkmalen des Anspruchs 1 gelöst. Die Unteransprüche betreffen bevorzugte Ausgestaltungen der Erfindung.

Gemäß Anspruch 1 ist vorgesehen, dass die Haltemittel derart angeordnet sind, dass die Verbindungsmittel im angebrachten Zustand oberhalb der Gabelkrone oder über die Gabelkrone hinweg gespannt werden können, wodurch sich bei ausschließlicher Halterung des mindestens einen Spritzschutzteils durch die im Bereich der Gabelkrone gespannten Verbindungsmittel eine feste und sichere Anbringung des Spritzschutzteils an dem Fahrrad ergibt. Dadurch ergibt sich auch bei ausschließlicher Halterung des mindestens einen Spritzschutzteils durch die im Bereich der Gabelkrone gespannten Verbindungsmittel eine feste und sichere Anbringung des Spritzschutzteils an dem Fahrrad. Durch die Befestigung an der Gabelkrone wird der Reifendurchlauf nicht verringert, so dass die Unfallgefahr reduziert wird. Der erfindungsgemäße Radschützer kann insbesondere nur aus einem Spritzschutzteil und den Verbindungsmitteln bestehen, so dass er eine sehr geringe Teileanzahl aufweist, vorzugsweise aus zwei Teilen besteht.

Es kann vorgesehen sein, dass das mindestens eine Teil der einfedernden Vorderradgabel ein Standrohr ist, wobei insbesondere die Anbringung an beiden Standrohren gleichzeitig erfolgen kann. Durch die Anbringung an beiden Standrohren ergibt sich eine stabile Verbindung, weil der Radschützer beziehungsweise das Spritzschutzteil zwischen zwei Befestigungsstellen gehalten wird.

Es besteht die Möglichkeit, dass die Verbindungsmittel zumindest teilweise einstückig mit dem mindestens einen Spritzschutzteil ausgebildet, insbesondere an dem mindestens einen Spritzschutzteil angeformt sind. Auf diese Weise wird einerseits die Stabilität der Verbindung erhöht. Andererseits können durch die Anformung die Kosten der Herstellung gesenkt werden, weil das Spritzschutzteil zusammen mit den Verbindungsmitten als einstückiges Teil in einem Arbeitsschritt im Spritzgussverfahren hergestellt werden kann.

Es besteht die Möglichkeit, dass das mindestens eine Spritzschutzteil im Bereich der Verbindungsmittel eine Vertiefung, insbesondere eine im Längsschnitt des mindestens einen Spritzschutzteils im Wesentlichen U-förmige Vertiefung aufweist. Diese Vertiefung ermöglicht die Verwendung des Radschützers für eine einfedernde Vorderradgabel, weil im Bereich der Vertiefung mindestens ein weitgehend vertikaler Abschnitt des Radschützers bei dem Einfedern der Vorderradgabel zwischen einer Gabelbrücke und einem Gabelkopf bewegt werden kann.

Weiterhin kann vorgesehen sein, dass die Haltemittel außerhalb der Vertiefung, vorzugsweise auf einander gegenüberliegenden Seiten der Vertiefung angeordnet sind.

Die dafür verwendeten Verbindungsmittel können beispielsweise als mindestens ein elastisches Band ausgebildet sein, das bei härterem Einsatz die Stabilität eines vorderen und eines hinteren Teils des mindestens einen Spritzschutzteils unterstützt.

Es besteht die Möglichkeit, dass das mindestens eine Spritzschutzteil vollständig oder zumindest abschnittsweise aus einem weichen, gummiähnlichen Material besteht. Dadurch kann zumindest weitgehend verhindert werden, dass der Radschützer bei Vibrationen im Fahrbetrieb Klappergeräusche erzeugt. Das Spritzschutzteil kann im Spritzgussverfahren hergestellt werden. Dadurch lässt es sich einfach als dreidimensionales Produkt gestalten, das optimale Anpassungen an Gabel und Rahmen ermöglicht.

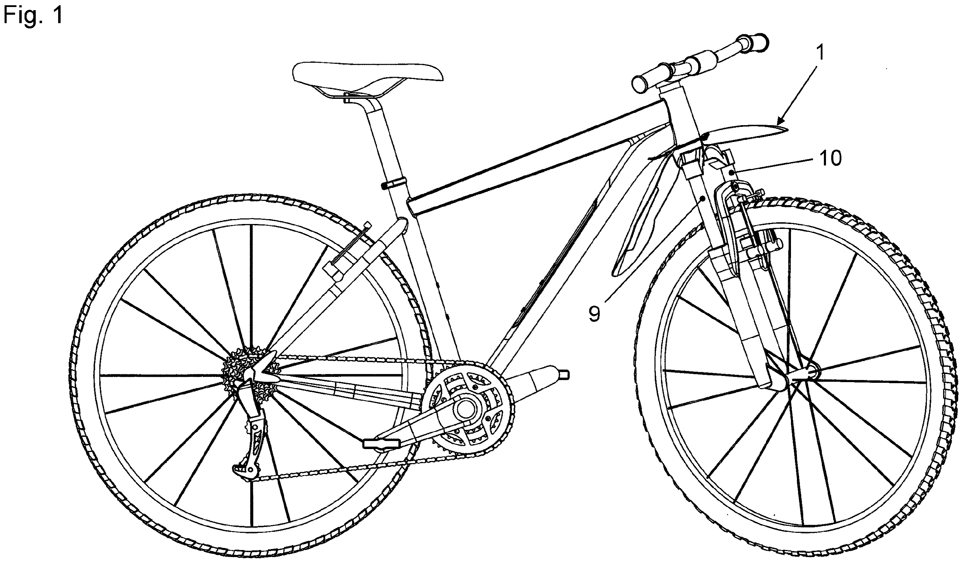

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Ansicht eines Fahrrads mit einer Ausführungsform eines daran montierten erfindungsgemäßen Radschützers;
- Fig. 2: eine Detailseitenansicht auf den Radschützer in einem mit dem Fahrrad gemäß Fig. 1 verbundenen Zustand;
- Fig. 3: eine Detailseitenansicht auf den Radschützer in einem mit einer anderen Ausführungsform eines Fahrrads verbundenen Zustand;
- Fig. 4: eine Seitenansicht der Ausführungsform des Radschützers;
- Fig. 5: eine Draufsicht auf die Ausführungsform des Radschützers.

In den Figuren sind gleiche oder funktional gleiche Teile mit gleichen Bezugszeichen versehen.

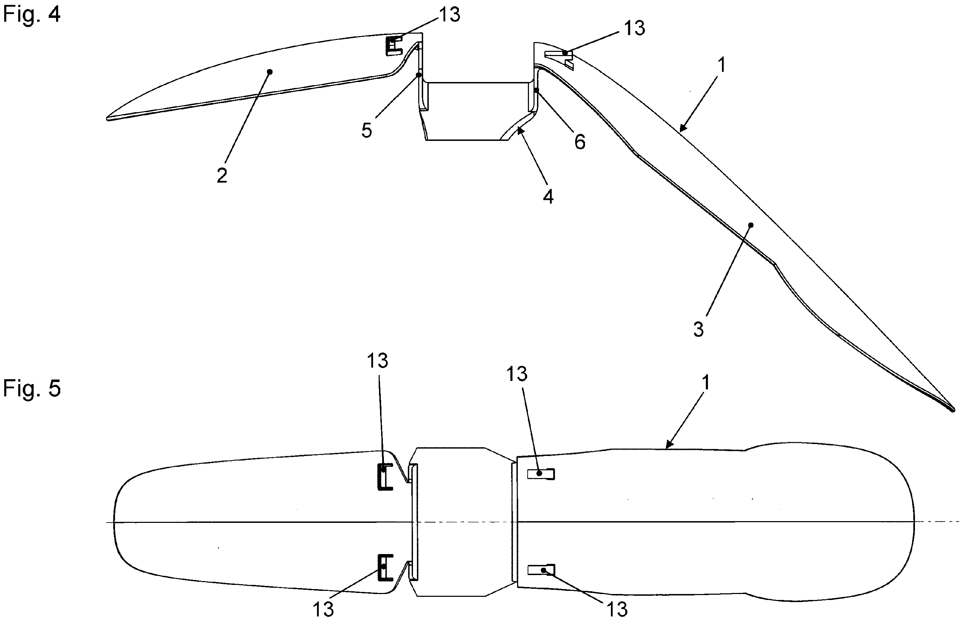

Fig. 4 und Fig. 5 verdeutlichen, dass die Ausführungsform eines Radschützers ein einstückiges Spritzschutzteil 1 umfasst. Das Spritzschutzteil 1 ist in einem vorderen Abschnitt 2 und einem hinteren Abschnitt 3 teiltorusförmig ausgebildet und damit an die Form eines Fahrradreifens angepasst. Zwischen diesen beiden Abschnitten 2, 3 ist ein im Wesentlichen U-förmiger Abschnitt 4 vorgesehen, der mit dem vorderen und dem hinteren Abschnitt 2, 3 jeweils einen Winkel von etwa 90° einschließt. Die auf diese Weise im eingebauten Zustand weitgehend vertikal verlaufenden Wände 5, 6 können bei dem Einfedern der Vorderradgabel in an sich bekannter Weise zwischen einer Gabelbrücke und einem Gabelkopf bewegt werden kann.

Es besteht durchaus die Möglichkeit, bei der Ausführungsform des Radschützers anstelle eines Spritzschutzteils 1 zwei oder mehr Spritzschutzteile vorzusehen, die geeignet miteinander verbunden sind. Beispielsweise können ein vorderes Spritzschutzteil und ein hinteres Spritzschutzteil vorgesehen werden, die im Wesentlichen dem vorderen und dem hinteren Abschnitt 2, 3 des abgebildeten Spritzschutzteils 1 entsprechen. Diese Spritzschutzteile können beispielsweise über mindestens ein U-förmiges Verbindungsteil verbunden werden, das insbesondere sich von dem U nach außen erstreckende Verbindungsabschnitte aufweist, die in Laschen der Spritzschutzteile eingreifen können, wie dies beispielsweise aus der EP 2 070 810 A1 bekannt ist.

Bei der Ausführungsform des Radschützers sind andere Variationen des mindestens einen Spritzschutzteils möglich. Beispielsweise können auch drei oder mehr Spritzschutzteile verbunden werden. Weiterhin kann auch bei der beschriebenen Variante mit zwei über ein U miteinander verbundenen Teilen das vordere oder das hintere Spritzschutzteil weggelassen werden. Weiterhin kann auch auf einen U-förmigen Absatz des Spritzschutzteils verzichtet werden.

Fig. 4 und Fig.5 zeigen, dass das Spritzschutzteil 1 des Radschützers Haltemittel 13 für das Anbringen von Verbindungsmitteln 14 aufweist. Dabei sind die Haltemittel 13 außerhalb der von dem U-förmigen Abschnitt 4 gebildeten Vertiefung auf einander gegenüberliegenden Seiten der Vertiefung angeordnet. Im abgebildeten Ausführungsbeispiel sind auf jeder Seite der Vertiefung zwei Haltemittel 13 angeordnet.

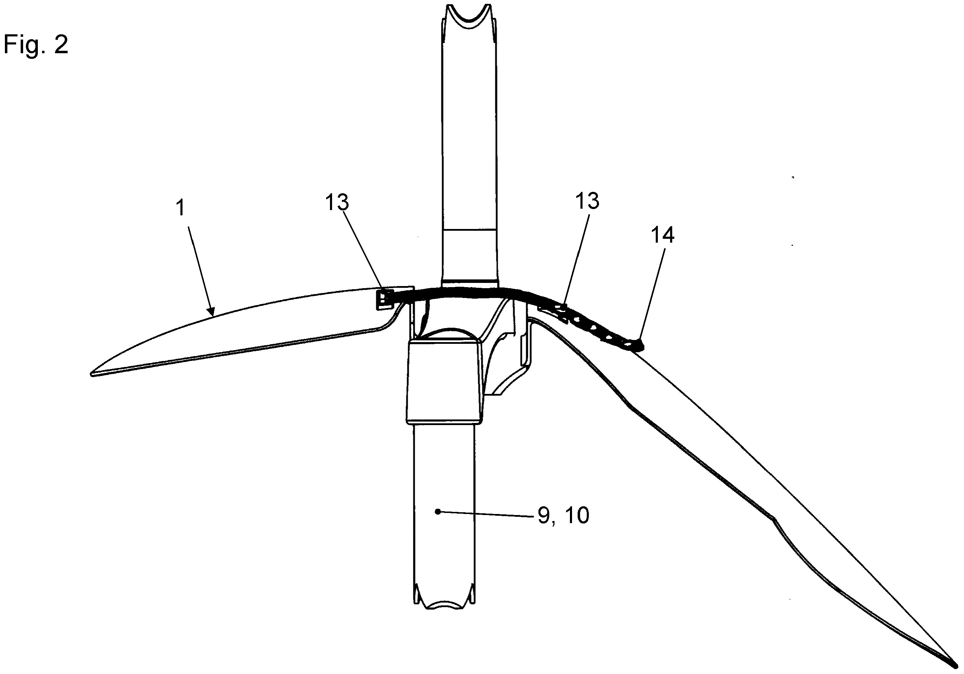

Die an den Haltemitteln 13 anbringbaren Verbindungsmittel 14 können insbesondere als elastisches Band ausgebildet sein. Fig. 2 zeigt, dass dieses als elastisches Band ausgeführte Verbindungsmittel 14 über die Gabelkrone hinweg gespannt werden kann. Dabei ist in Fig. 2 die einfedernde Vorderradgabel als Standard- beziehungsweise "Right-side-up"-Federgabel ausgebildet.

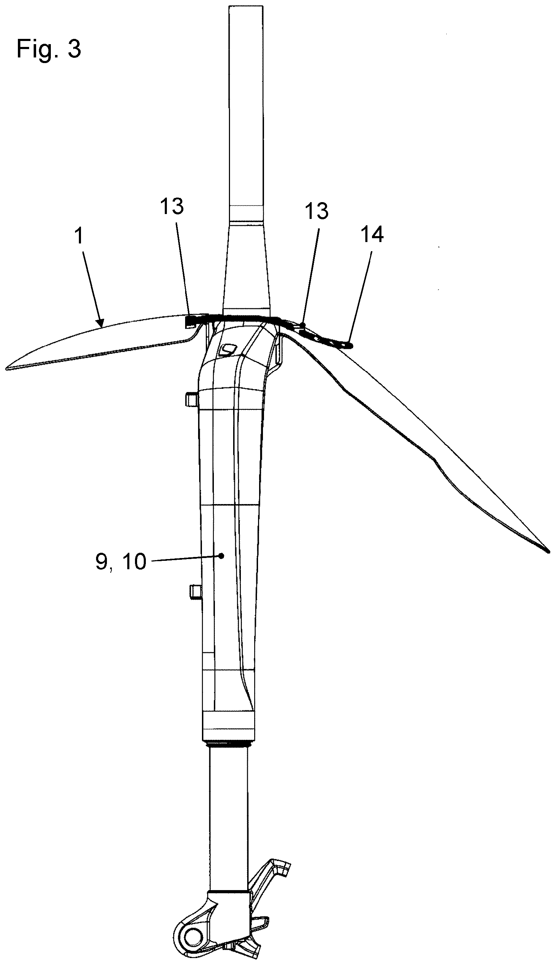

Fig. 3 zeigt die Anbringung des Radschützers an einer "Upside-down"-Federgabel. Bei dieser Federgabel sind die Standrohre 9, 10 dicker als die weiter unten angeordneten Tauchrohre ausgebildet, wobei die Tauchrohre in die Standrohre eintauchen.

Das Spritzschutzteil kann aus einem weichen, gummiähnlichen Material bestehen, was den Vorteil bietet, dass es auch bei Vibrationen im Fahrbetrieb keine Klappergeräusche erzeugt.

Das Spritzschutzteil kann im Spritzgussverfahren hergestellt werden. Dadurch lässt es sich einfach als dreidimensionales Produkt gestalten.

## Patentansprüche

1. Radschützer für ein Fahrrad mit einfedernder Vorderradgabel, umfassend
- mindestens ein Spritzschutzteil (1),
- Verbindungsmittel für die mittelbare oder unmittelbare Verbindung des mindestens einen Spritzschutzteils (1) mit einem Teil des Fahrrads, wobei die Verbindungsmittel derart gestaltet sind, dass sie eine Anbringung des mindestens einen Spritzschutzteils (1) an mindestens einem Teil der einfedernden Vorderradgabel ermöglichen, sowie
- Haltemittel (13) für das Anbringen der Verbindungsmittel (14),
**dadurch gekennzeichnet, dass** die Haltemittel (13) derart angeordnet sind, dass die Verbindungsmittel (14) im angebrachten Zustand oberhalb der Gabelkrone oder über die Gabelkrone hinweg gespannt werden können, wodurch sich bei ausschließlicher Halterung des mindestens einen Spritzschutzteils (1) durch die im Bereich der Gabelkrone gespannten Verbindungsmittel (14) eine feste und sichere Anbringung des Spritzschutzteils (1) an dem Fahrrad ergibt.

2. Radschützer nach Anspruch 1, **dadurch gekennzeichnet, dass** das mindestens eine Teil der einfedernden Vorderradgabel ein Standrohr (9, 10) ist, wobei insbesondere die Anbringung an beiden Standrohren (9, 10) gleichzeitig erfolgen kann.

3. Radschützer nach einem der Ansprüche 1 oder 2, **dadurch gekennzeichnet, dass** die Verbindungsmittel zumindest teilweise einstückig mit dem mindestens einen Spritzschutzteil (1) ausgebildet, insbesondere an dem mindestens einen Spritzschutzteil (1) angeformt sind.

4. Radschützer nach einem der Ansprüche 1 bis 3, **dadurch gekennzeichnet, dass** das mindestens eine Spritzschutzteil (1) im Bereich der Verbindungsmittel eine Vertiefung, insbesondre eine im Längsschnitt des mindestens einen Spritzschutzteils (1) im Wesentlichen U-förmige Vertiefung aufweist.

5. Radschützer nach Anspruch 4, **dadurch gekennzeichnet, dass** die Haltemittel (13) außerhalb der Vertiefung, vorzugsweise auf einander gegenüberliegenden Seiten der Vertiefung angeordnet sind.

6. Radschützer nach einem der Ansprüche 1 bis 5, **dadurch gekennzeichnet, dass** die Verbindungsmittel (12, 14) als elastisches Band oder Kabelbinder oder dergleichen ausgebildet sind.

7. Radschützer nach einem der Ansprüche 1 bis 6, **dadurch gekennzeichnet, dass** das mindestens eine Spritzschutzteil (1) vollständig oder zumindest abschnittsweise aus einem weichen, gummiähnlichen Material besteht.

8. Radschützer nach einem der Ansprüche 1 bis 7, **dadurch gekennzeichnet, dass** das mindestens eine Spritzschutzteil (1) ein Spritzgussteil ist.

## Claims

1. Wheel protector for a bicycle with retracting front fork, comprising
- at least one mudguard part (1),
- connection means for the direct or indirect connection of the at least one mudguard part (1) to a part of the bicycle, wherein the connection means are designed such that they enable the at least one mudguard part (1) to be attached to at least one part of the retracting front fork, and
- holding means (13) for attaching the connection means (14),
**characterised in that** the holding means (13) are arranged such that, in the attached state, the connection means (14) can be tensioned above the fork crown or over the fork crown, whereby, when the at least one mudguard part (1) is only held by the connection means (14) tensioned in the region of the fork crown, the mudguard part (1) is firmly and securely attached to the bicycle.

2. Wheel protector according to claim 1, **characterised in that** the at least one part of the retractable front fork is a stanchion tube (9, 10), wherein in particular the attachment to both stanchion tubes (9, 10) can be made at the same time.

3. Wheel protector according to one of claims 1 or 2, **characterised in that** the connection means are at least partially formed in one piece with the at least one mudguard part (1), in particular are moulded onto the at least one mudguard part (1).

4. Wheel protector according to one of claims 1 to 3, **characterised in that** the at least one mudguard part (1) has a recess in the region of the connection means, in particular a substantially U-shaped recess in the longitudinal section of the at least one mudguard part (1).

5. Wheel protector according to claim 4, **characterised in that** the holding means (13) are arranged outside the recess, preferably on opposite sides of the recess.

6. Wheel protector according to one of claims 1 to 5, **characterised in that** the connection means (12, 14) are designed as elastic bands or cable ties or the like.

7. Wheel protector according to one of claims 1 to 6, **characterised in that** the at least one mudguard part (1) consists entirely or at least in sections of a soft, rubber-like material.

8. Wheel protector according to one of claims 1 to 7, **characterised in that** the at least one mudguard part (1) is an injection moulded part.

## Revendications

1. Garde-boue pour une bicyclette avec une fourche de roue avant rétractable, comprenant
- au moins une pièce de protection anti-projections (1),
- des moyens de connexion pour la connexion directe ou indirecte de l'au moins une pièce de protection anti-projections (1) à une pièce de la bicyclette, dans lequel les moyens de connexion sont conçus pour permettre l'application de l'au moins une pièce de protection anti-projections (1) à au moins une pièce de la fourche de roue avant rétractable, ainsi que
- des moyens de fixation (13) pour l'application des moyens de connexion (14),
**caractérisé en ce que** les moyens de fixation (13) sont disposés de sorte que les moyens de connexion (14), à l'état appliqué, peuvent être tendus au-dessus de ou sur la couronne de fourche, ce qui fait que, lorsque l'au moins une pièce de protection anti-projections (1) est fixée exclusivement par les moyens de connexion (14) tendus dans la zone de la couronne de fourche, la pièce de protection anti-projections (1) est fixée fermement et solidement à la bicyclette.

2. Garde-boue selon la revendication 1, **caractérisé en ce que** l'au moins une pièce de la fourche de roue avant rétractable est un tube vertical (9, 10), dans lequel l'application sur les deux tubes verticaux (9, 10) peut en particulier s'effectuer simultanément.

3. Garde-boue selon l'une quelconque des revendications 1 ou 2, **caractérisé en ce que** les moyens de connexion sont conçus au moins partiellement d'un seul tenant avec l'au moins une pièce de protection anti-projections (1), en particulier sont formés d'un seul tenant sur l'au moins une pièce de protection anti-projections (1).

4. Garde-boue selon l'une quelconque des revendications 1 à 3, **caractérisé en ce que** l'au moins une pièce de protection anti-projections (1) présente un évidement dans la zone des moyens de connexion, en particulier un évidement sensiblement en forme de U dans la section longitudinale de l'au moins une pièce de protection anti-projections (1).

5. Garde-boue selon la revendication 4, **caractérisé en ce que** les moyens de fixation (13) sont disposés à l'extérieur de l'évidement, de préférence sur des côtés opposés de l'évidement.

6. Garde-boue selon l'une quelconque des revendications 1 à 5, **caractérisé en ce que** les moyens de connexion (12, 14) sont conçus en tant que bande élastique ou serre-câble ou similaire.

7. Garde-boue selon l'une quelconque des revendications 1 à 6, **caractérisé en ce que** l'au moins une pièce de protection anti-projections (1) est constituée entièrement ou au moins partiellement d'un matériau souple semblable au caoutchouc.

8. Garde-boue selon l'une quelconque des revendications 1 à 7, **caractérisé en ce que** l'au moins une pièce de protection anti-projections (1) est une pièce moulée par injection.
